(19) Europäisches Patentamt
European Patent Office
Office européen des brevets

(11) **EP 4 352 890 B1**

(12) **EUROPEAN PATENT SPECIFICATION**

(45) Date of publication and mention
of the grant of the patent:
**31.12.2025 Bulletin 2026/01**

(21) Application number: **21944546.7**

(22) Date of filing: **09.06.2021**

(51) International Patent Classification (IPC):
***H04B 7/185*** (2006.01)

(52) Cooperative Patent Classification (CPC):
**H04B 7/18506; H04W 56/0015**

(86) International application number:
**PCT/CN2021/099076**

(87) International publication number:
**WO 2022/257036 (15.12.2022 Gazette 2022/50)**

(54) **DEDICATED SYNCHRONIZATION SIGNAL BLOCK DESIGN FOR WIRELESS AIR-TO-GROUND COMMUNICATIONS**

ENTWURF EINES DEDIZIERTEN SYNCHRONISATIONSSIGNALBLOCKS FÜR DRAHTLOSE LUFT-BODEN-KOMMUNIKATION

CONCEPTION DE BLOC DE SIGNAL DE SYNCHRONISATION DÉDIÉ POUR COMMUNICATIONS SANS FIL AIR-SOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.04.2024 Bulletin 2024/16**

(73) Proprietor: **QUALCOMM INCORPORATED**
San Diego, California 92121-1714 (US)

(72) Inventors:
• **LIU, Kangqi**
San Diego, California 92121-1714 (US)
• **LI, Qiaoyu**
San Diego, California 92121-1714 (US)
• **WEI, Chao**
San Diego, California 92121-1714 (US)
• **XU, Hao**
San Diego, California 92121-1714 (US)

(74) Representative: **Tomkins & Co**
**5 Dartmouth Road**
**Dublin 6, D06 F9C7 (IE)**

(56) References cited:
WO-A1-2019/222133   WO-A1-2020/125424
WO-A1-2021/101831   KR-A- 20060 046 938
US-A1- 2017 111 103   US-B2- 9 991 945

• ZTE CORPORATION: "Discussion on ATG network", 3GPP DRAFT; R4-2011029, vol. RAN WG4, 7 August 2020 (2020-08-07), pages 1 - 4, XP051913877

**Description**

FIELD OF THE DISCLOSURE

Aspects of the present disclosure generally relate to wireless communication and to techniques and apparatuses for a dedicated synchronization signal block (SSB) design for wireless air-to-ground (ATG) communications.

BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A UE may communicate with a BS via the downlink and uplink. "Downlink" (or forward link) refers to the communication link from the BS to the UE, and "uplink" (or reverse link) refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, or the like.

The above multiple access technologies have been adopted in various telecommunication standards to provide a common protocol that enables different user equipment to communicate on a municipal, national, regional, and even global level. NR, which may also be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. As the demand for mobile broadband access continues to increase, further improvements in LTE, NR, and other radio access technologies remain useful. United States Patent No. 9,991,945 relates to a device and method for air-to-ground communication of aircraft. Korean Patent Application Publication No. KR 2006 0046938 relates to an apparatus and method for using of mobile communication station in airplane.

SUMMARY

The invention is defined by the subject-matter of the independent claims. Preferred embodiments are defined in the dependent claims. In some aspects, an apparatus for wireless communication at a user equipment (UE) includes a memory and one or more processors, coupled to the memory, configured to: receive, from a base station, an air-to-ground (ATG) dedicated synchronization signal block (SSB); and communicate with the base station based at least in part on the ATG dedicated SSB.

In some aspects, an apparatus for wireless communication at a base station includes a memory; and one or more processors, coupled to the memory, configured to: transmit, to an ATG UE, an ATG dedicated SSB; and communicate with the ATG UE based at least in part on the ATG dedicated SSB.

In some aspects, a method of wireless communication performed by an apparatus of a UE includes receiving, from a base station, an ATG dedicated SSB; and communicating with the base station based at least in part on the ATG dedicated SSB.

In some aspects, a method of wireless communication performed by an apparatus of a base station includes transmitting, to an ATG UE, an ATG dedicated SSB; and communicating with the ATG UE based at least in part on the ATG dedicated SSB.

In some aspects, a non-transitory computer-readable medium storing a set of instructions for wireless communication includes one or more instructions that, when executed by one or more processors of a UE, cause the UE to: receive, from a base station, an ATG dedicated SSB; and communicate with the base station based at least in part on the ATG dedicated SSB.

In some aspects, a non-transitory computer-readable medium storing a set of instructions for wireless communication includes one or more instructions that, when executed by one or more processors of a base station, cause the base station to: transmit, to an ATG UE, an ATG dedicated SSB; and communicate with the ATG UE based at least in part on the ATG dedicated SSB.

In some aspects, an apparatus for wireless communication includes means for receiving, from a base station, an ATG dedicated SSB; and means for communicating with the base station based at least in part on the ATG dedicated SSB.

In some aspects, an apparatus for wireless communication includes means for transmitting, to an ATG UE, an ATG dedicated SSB; and means for communicating with the ATG UE based at least in part on the ATG dedicated SSB.

Aspects generally include a method, apparatus, system, computer program product, non-transitory computer-readable medium, user equipment, base station, wireless communication device, and/or processing system as substantially described herein with reference to and as illustrated by the drawings.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/-purchasing devices, medical devices, or artificial intelligence-enabled devices). Aspects may be implemented in chip-level components, modular components, non-modular components, non-chip-level components, device-level components, or system-level components. Devices incorporating described aspects and features may include additional components and features for implementation and practice of claimed and described aspects. For example, transmission and reception of wireless signals may include a number of components for analog and digital purposes (e.g., hardware components including antennas, radio frequency chains, power amplifiers, modulators, buffers, processors, interleavers, adders, or summers). It is intended that aspects described herein may be practiced in a wide variety of devices, components, systems, distributed arrangements, or end-user devices of varying size, shape, and constitution.

BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.

Fig. 1 is a diagram illustrating an example of a wireless network, in accordance with the present disclosure.

Fig. 2 is a diagram illustrating an example of a base station in communication with a UE in a wireless network, in accordance with the present disclosure.

Fig. 3 is a diagram illustrating an example 300 of an air-to-ground (ATG) network, in accordance with the present disclosure.

Fig. 4 is a diagram illustrating an example 400 of interference between a UE 320 and an ATG UE 305, in accordance with the present disclosure.

Fig. 5 is a diagram illustrating an example 500 of a synchronization signal (SS) hierarchy, in accordance with the present disclosure.

Fig. 6 is a diagram illustrating an example 600 of signaling using an ATG dedicated SS block (SSB) 535, in accordance with the present disclosure.

Figs. 7-8 are diagrams illustrating example processes associated with ATG dedicated SSB signaling, in accordance with the present disclosure.

Figs. 9-10 are block diagrams of example apparatuses for wireless communication, in accordance with the present disclosure.

DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technology (RAT), aspects of the present disclosure can be applied to other RATs, such as a 3G RAT, a 4G RAT, and/or a RAT subsequent to 5G (e.g., 6G).

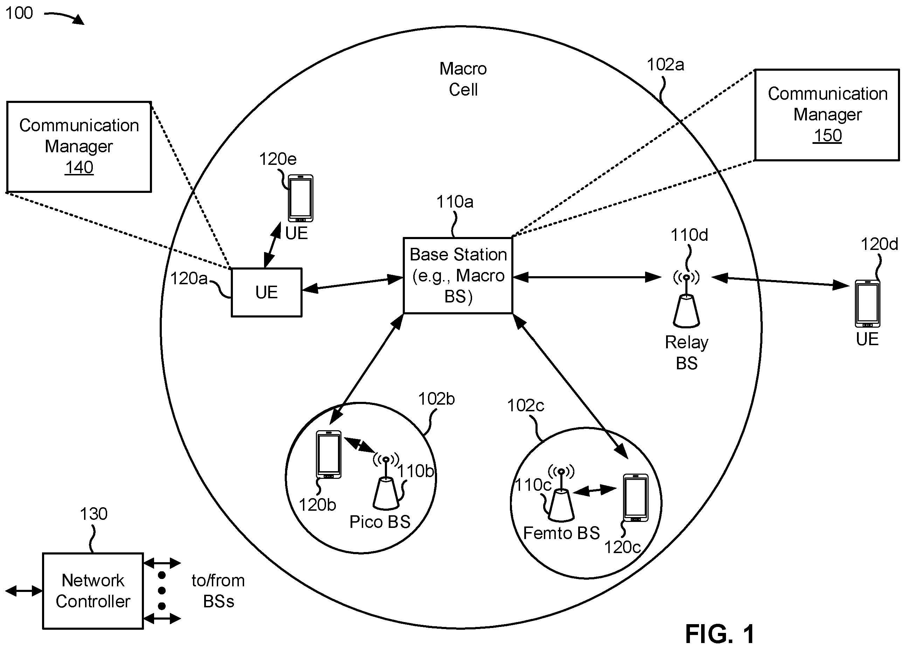

Fig. 1 is a diagram illustrating an example of a wireless network 100, in accordance with the present disclosure. The wireless network 100 may be or may include elements of a 5G (NR) network and/or an LTE network, among other examples. The wireless network 100 may include a number of base stations 110 (shown as BS 110a, BS 110b, BS 110c, and BS 110d) and other network entities. A base station (BS) is an entity that communicates with user equipment (UEs) and may also be referred to as an NR BS, a Node B, a gNB, a 5G node B (NB), an access point, a transmit receive point (TRP), or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

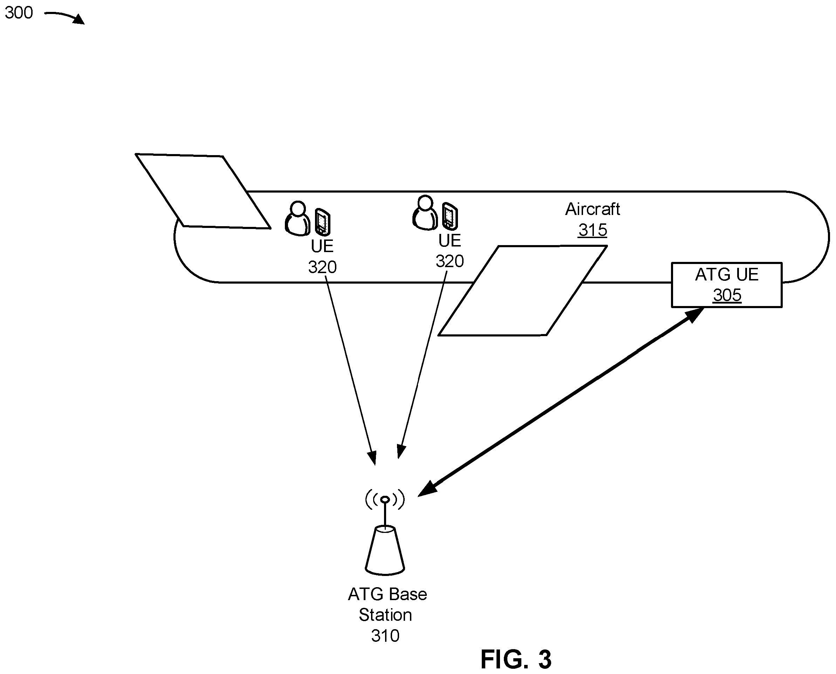

In some aspects, a BS may be associated with an ATG network such as an ATG radio access network (RAN). ATG networks involve communication between a UE and a base station, where at least one of the UE or the base station is airborne or in orbit. An example of an ATG network is described in connection with Fig. 3, below.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces, such as a direct physical connection or a virtual network, using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay BS 110d may communicate with macro BS 110a and a UE 120d in order to facilitate communication between BS 110a and UE 120d. A relay BS may also be referred to as a relay station, a relay base station, a relay, or the like.

Wireless network 100 may be a heterogeneous network that includes BSs of different types, such as macro BSs, pico BSs, femto BSs, relay BSs, or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be associated with an ATG network. For example, a UE may be associated with an aircraft (referred to herein as an aircraft UE). An example of an ATG RAN involving a set of UEs and an aircraft UE is described in connection with Fig. 3.

Some UEs may be considered machine-type communication (MTC) or evolved or enhanced machine-type communication (eMTC) UEs. MTC and eMTC UEs include, for example, robots, drones, remote devices, sensors, meters, monitors, and/or location tags, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled. Some UEs may be considered aircraft UEs, which may provide connectivity to a RAN for an aircraft.

In general, any number of wireless networks may be deployed in a given geographic area. Each wireless network may support a particular RAT and may operate on one or more frequencies. A RAT may also be referred to as a radio technology, an air interface, or the like. A frequency may also be referred to as a carrier, a frequency channel, or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol or a vehicle-to-infrastructure (V2I) protocol), and/or a mesh network. In this case, the UE 120 may perform scheduling operations, resource selection operations, and/or other operations described elsewhere herein as being performed by the base station 110.

Devices of wireless network 100 may communicate using the electromagnetic spectrum, which may be subdivided based on frequency or wavelength into various classes, bands, channels, or the like. For example, devices of wireless network 100 may communicate using an operating band having a first frequency range (FR1), which may span from 410 MHz to 7.125 GHz, and/or may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" or the like, if used herein, may broadly represent frequencies less than 6 GHz, frequencies within FR1, and/or mid-band frequencies (e.g., greater than 7.125 GHz). Similarly, unless specifically stated otherwise, it should be understood that the term "millimeter wave" or the like, if used herein, may broadly represent frequencies within the EHF band, frequencies within FR2, and/or mid-band frequencies (e.g., less than 24.25 GHz). It is contemplated that the frequencies included in FR1 and FR2 may be modified, and techniques described herein are applicable to those modified frequency ranges.

In some aspects, the UE 120 may include a communication manager 140. As described in more detail elsewhere herein, the communication manager 140 may receive, from a base station, an air-to-ground (ATG) dedicated synchronization signal block (SSB); and communicate with the base station based at least in part on the ATG dedicated SSB. Additionally, or alternatively, the communication manager 140 may perform one or more other operations described herein.

In some aspects, the base station 110 may include a communication manager 150. As described in more detail elsewhere herein, the communication manager 150 may transmit, to an ATG UE, an ATG dedicated SSB; and communicate with the ATG UE based at least in part on the ATG dedicated SSB. Additionally, or alternatively, the communication manager 150 may perform one or more other operations described herein.

As indicated above, Fig. 1 is provided as an example. Other examples may differ from what is described with regard to Fig. 1.

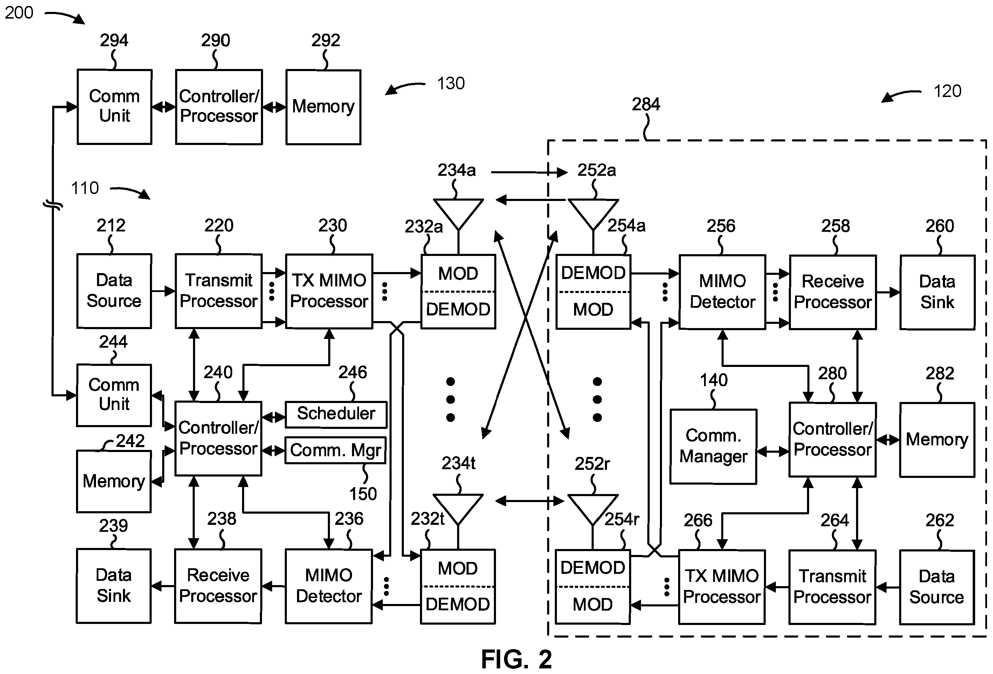

Fig. 2 is a diagram illustrating an example 200 of a base station 110 in communication with a UE 120 in a wireless network 100, in accordance with the present disclosure. Base station 110 may be equipped with T antennas 234a through 234t, and UE 120 may be equipped with R antennas 252a through 252r, where in general T ≥ 1 and R ≥ 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI)) and control information (e.g., CQI requests, grants, and/or upper layer signaling) and provide overhead symbols and control symbols. Transmit processor 220 may also generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a channel quality indicator (CQI) parameter, among other examples. In some aspects, one or more components of UE 120 may be included in a housing 284.

Network controller 130 may include communication unit 294, controller/processor 290, and memory 292. Network controller 130 may include, for example, one or more devices in a core network. Network controller 130 may communicate with base station 110 via communication unit 294.

Antennas (e.g., antennas 234a through 234t and/or antennas 252a through 252r) may include, or may be included within, one or more antenna panels, antenna groups, sets of antenna elements, and/or antenna arrays, among other examples. An antenna panel, an antenna group, a set of antenna elements, and/or an antenna array may include one or more antenna elements. An antenna panel, an antenna group, a set of antenna elements, and/or an antenna array may include a set of coplanar antenna elements and/or a set of non-coplanar antenna elements. An antenna panel, an antenna group, a set of antenna elements, and/or an antenna array may include antenna elements within a single housing and/or antenna elements within multiple housings. An antenna panel, an antenna group, a set of antenna elements, and/or an antenna array may include one or more antenna elements coupled to one or more transmission and/or reception components, such as one or more components of Fig. 2.

On the uplink, at UE 120, a transmit processor 264 may receive and process data from a data source 262 and control information (e.g., for reports that include RSRP, RSSI, RSRQ, and/or CQI) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM or CP-OFDM), and transmitted to base station 110. In some aspects, a modulator and a demodulator (e.g., MOD/DEMOD 254) of the UE 120 may be included in a modem of the UE 120. In some aspects, the UE 120 includes a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein (for example, as described with reference to Figs. 3-8).

At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240.

Base station 110 may include communication unit 244 and communicate to network controller 130 via communication unit 244. Base station 110 may include a scheduler 246 to schedule UEs 120 for downlink and/or uplink communications. In some aspects, a modulator and a demodulator (e.g., MOD/DEMOD 232) of the base station 110 may be included in a modem of the base station 110. In some aspects, the base station 110 includes a transceiver. The transceiver may include any combination of antenna(s) 234, modulators and/or demodulators 232, MIMO detector 236, receive processor 238, transmit processor 220, and/or TX MIMO processor 230. The transceiver may be used by a processor (e.g., controller/processor 240) and memory 242 to perform aspects of any of the methods described herein (for example, as described with reference to Figs. 3-8).

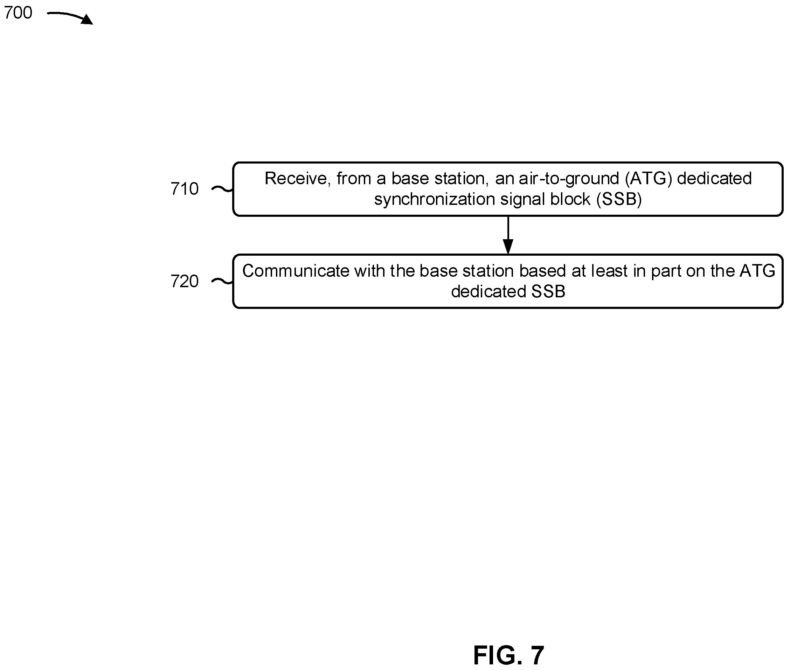

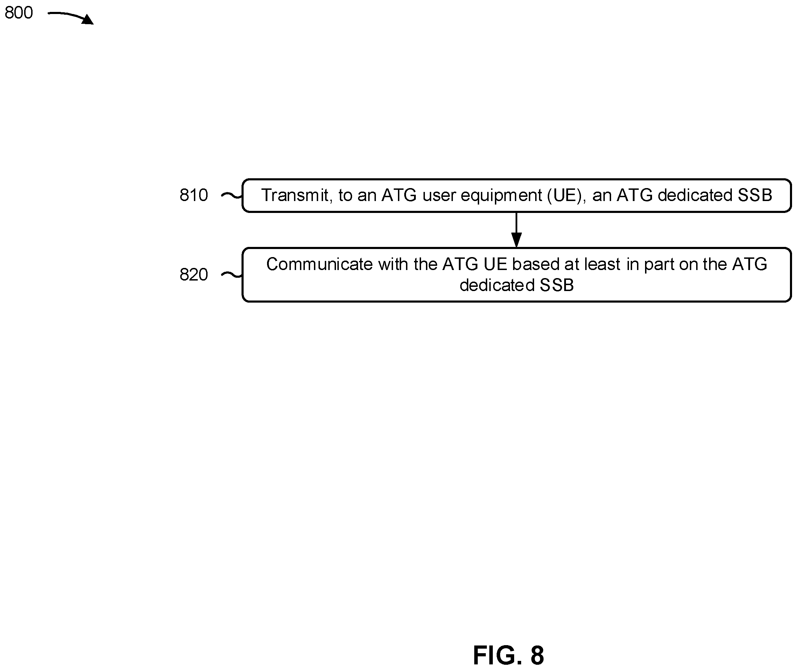

Controller/processor 240 of base station 110, controller/processor 280 of UE 120, and/or any other component(s) of Fig. 2 may perform one or more techniques associated with a dedicated SSB for ATG communications, as described in more detail elsewhere herein. For example, controller/processor 240 of base station 110, controller/processor 280 of UE 120, and/or any other component(s) of Fig. 2 may perform or direct operations of, for example, process 700 of Fig. 7, process 800 of Fig. 8, and/or other processes as described herein. Memories 242 and 282 may store data and program codes for base station 110 and UE 120, respectively. In some aspects, memory 242 and/or memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 700 of Fig. 7, process 800 of Fig. 8, and/or other processes as described herein. In some aspects, executing instructions may include running the instructions, converting the instructions, compiling the instructions, and/or interpreting the instructions, among other examples.

In some aspects, the UE 120 includes means for receiving, from a base station, an ATG dedicated SSB; and/or means for communicating with the base station based at least in part on the ATG dedicated SSB. The means for the UE 120 to perform operations described herein may include, for example, one or more of communication manager 140, antenna 252, demodulator 254, MIMO detector 256, receive processor 258, transmit processor 264, TX MIMO processor 266, modulator 254, controller/processor 280, or memory 282.

In some aspects, the base station 110 includes means for transmitting, to an ATG UE, an ATG dedicated SSB; and/or means for communicating with the ATG UE based at least in part on the ATG dedicated SSB. The means for the base station 110 to perform operations described herein may include, for example, one or more of communication manager 150, transmit processor 220, TX MIMO processor 230, modulator 232, antenna 234, demodulator 232, MIMO detector 236, receive processor 238, controller/processor 240, memory 242, or scheduler 246.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

As indicated above, Fig. 2 is provided as an example. Other examples may differ from what is described with regard to Fig. 2.

Fig. 3 is a diagram illustrating an example 300 of an ATG network, in accordance with the present disclosure. An ATG network may facilitate ATG communications between a base station (e.g., BS 110) and a UE (e.g., UE 120). ATG communications are communications between a base station and a UE where at least one of the UE or the base station is airborne or in orbit. In one example, an ATG network may facilitate communication between a base station located on the ground (such as with up-tilted antennas) and a UE affixed to an airborne aircraft (such as with an antenna at the bottom of the aircraft). Generally, ATG communications may provide connectivity at a lower cost and with higher throughput and lower latency than satellite communication based access networks. It should be noted that "ATG" does not imply that communications necessarily flow from an airborne device to a device on the ground. Communications via an ATG link can flow from air to ground or from ground to air.

Example 300 includes an ATG UE 305 (e.g., UE 120) and an ATG base station 310 (e.g., base station 110). In some aspects, ATG UE 305 may be referred to as an aircraft UE. ATG UE 305 may provide mobile-terminated communication via a radio access network (RAN) accessed via ATG base station 310. For example, ATG UE 305 may facilitate air traffic management communication, aircraft surveillance communication, aircraft maintenance communication, aircraft passenger communication (such as via a small cell provided on aircraft 315) or the like. In some aspects, ATG UE 305 may have an antenna (e.g., antenna 252, such as a blade antenna), which may be mounted to aircraft 315. In some aspects, the antenna may have beamforming capabilities. In some aspects, the antenna may be associated with an advanced microwave sounding unit (AMSU).

ATG UE 305 is associated with an aircraft 315. In some examples, aircraft 315 is a passenger aircraft, though the techniques and apparatuses described herein are not limited to those involving passenger airplanes. Aircraft 315 may include any sort of aircraft, such as an airplane, a helicopter, an unmanned aerial vehicle (UAV), a lighter-than-air vehicle (e.g., a dirigible, such as a blimp or a rigid airship), a balloon, or the like.

Aircraft 315 includes one or more UEs 320 (e.g., UE 120). UE 320 may be referred to herein as a passenger UE. In some examples, UE 320 is associated with a passenger of aircraft 315. However, the techniques and apparatuses described herein are not limited to those in which UE 320 is associated with a passenger of aircraft 315. In some aspects, aircraft 315 may not include a UE 320. In some aspects, UE 320 is not an ATG UE 305. In some aspects, ATG UE 305 may be associated with a higher transmit power than UE 320. For example, ATG UE 305 may have a higher effective isotropically radiated power (EIRP), a higher transmission power, and/or a larger on-board antenna gain than UE 320. In some aspects, a large number of UEs 320 may be expected. For example, in a passenger aircraft 315, it may be expected that dozens or hundreds of UEs 320 may be present, and some subset of these UEs 320 may be active at a given time.

ATG UE 305 may be associated with a link to the ATG base station 310. The link is referred to herein as an ATG link. Communications via an ATG link can use time division duplexing (TDD) or frequency division duplexing (FDD). Generally, ATG communications may be associated with large inter-site distances (ISDs) and large coverage ranges. For example, an ATG network may be associated with ISDs of approximately 100 km to 200 km and up to 300 km in some scenarios (such as when aircraft 315 is over an area with few base stations, such as a body of water). In some cases, an ATG network may be deployed in the same frequency range or the same frequency band as a terrestrial network. In one example, an ATG network may be deployed in the range of approximately 4.5 -5 GHz. In some examples, an ATG network may be associated with a relatively large timing adjustment (TA) relative to a terrestrial network. A TA is applied to communications between two wireless nodes to account for propagation delays between the two wireless nodes. For example, in an ATG network which can be associated with up to 300 km ISDs, a 2 ms TA may reduce the occurrence of frequent handover and inter-cell interference (though TA values are variable and may differ from network to network or situation to situation). ATG networks may be associated with large per-cell throughput. For example, for a given aircraft 315, a data rate over 1 Gbps may be expected (such as 1.2 Gbps on the downlink and 600 Mbps on the uplink). Furthermore, in some scenarios, such as around high-traffic airports, many aircraft 315 may be within a single ATG cell. As just one example, in a cell of 18000 square kilometers, 60 aircraft 315 may be expected.

ATG base station 310 (e.g., BS 110) may include a terrestrial base station or a non-terrestrial base station. In some aspects, ATG base station 310 may be an NR-ATG specific base station. ATG base station 310 may provide a cell that covers aircraft 315.

As indicated above, Fig. 3 is provided as an example. Other examples may differ from what is described with regard to Fig. 3.

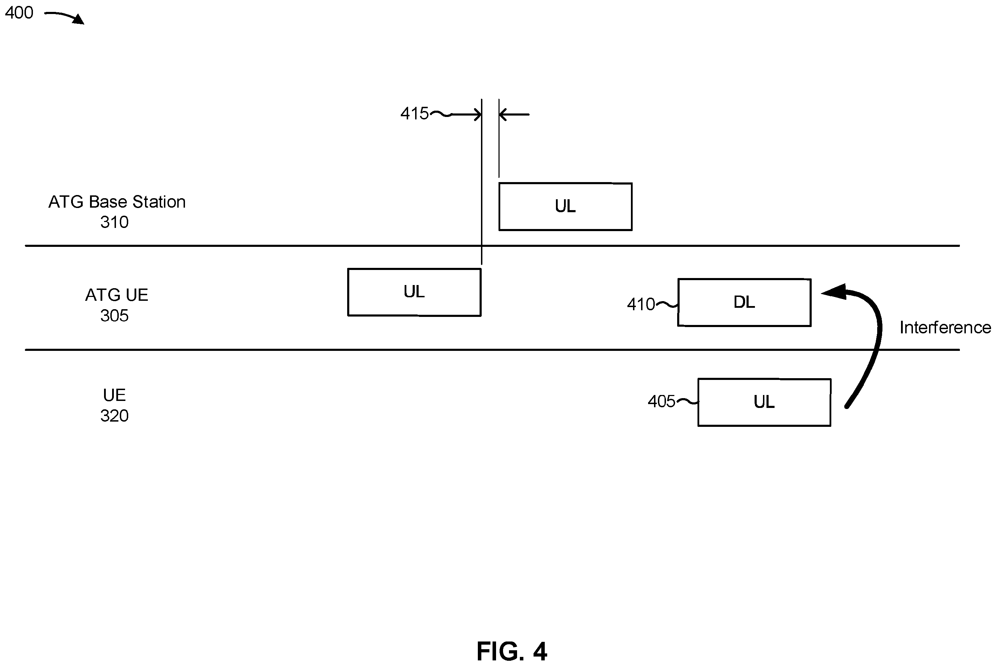

Fig. 4 is a diagram illustrating an example 400 of interference between a UE 320 and an ATG UE 305, in accordance with the present disclosure. As shown, example 400 includes an ATG base station 310, an ATG UE 305, and a UE 320.

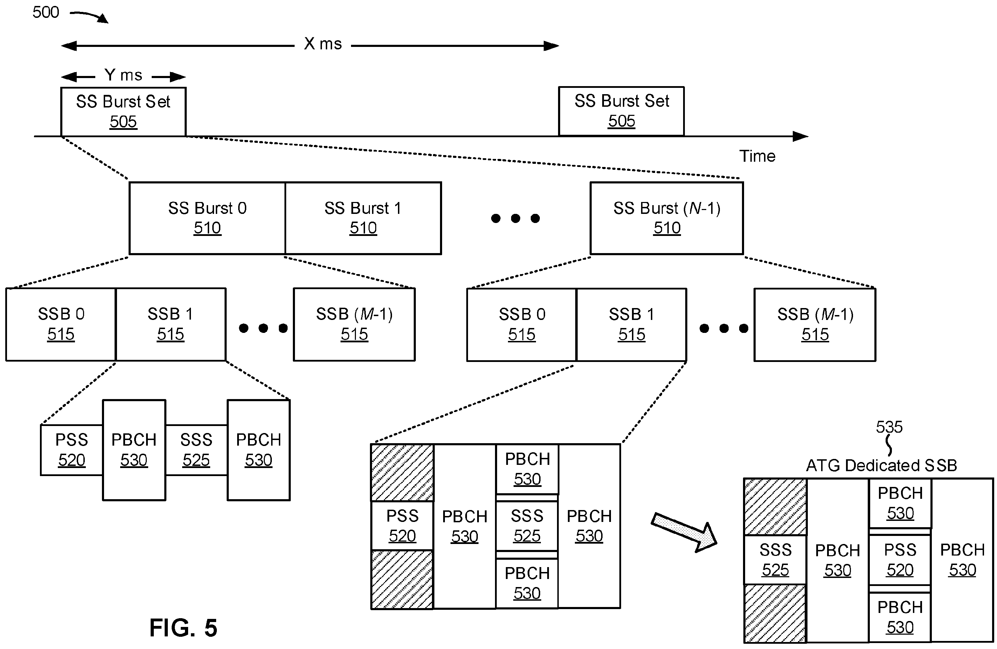

ATG UE 305's communications with ATG base station 310 may be associated with a receiving signal-to-interference-plus-noise (SINR) ratio. As one example, reception at ATG UE 305 may be associated with an SINR of approximately 20 dB. At this high SINR, it may be expected that passenger UEs 320 within aircraft 315 can also receive transmissions from ATG base station 310, even if these transmissions are intended for ATG UE 305. For example, a UE 320 may receive a synchronization signal block (SSB, defined in more detail in connection with Fig. 5) and may initiate a random access channel (RACH) procedure to connect to a cell provided by the ATG base station 310.

A RACH procedure is a procedure by which a UE can transmit a RACH message via a predefined resource, typically referred to as a physical RACH (PRACH) occasion. A PRACH occasion is configured with some number of PRACH preambles. A UE may select or be configured with a PRACH preamble, and may transmit the PRACH preamble via a first message of the RACH procedure. RACH procedures are used for various purposes. In the context described herein, RACH may be used for initial access (such as from a radio resource control (RRC) idle mode), transitioning from an inactive mode to a connected mode, RRC connection re-establishment, or handover. RACH may be used for on-demand system information (SI), beam failure recovery (BFR), time alignment for secondary cell addition, and/or synchronous reconfiguration, among other examples.

As mentioned above, the reception of an SSB decodable by an ATG UE 305 or a UE 320 may trigger the ATG UE 305 or the UE 320 to perform a RACH procedure. In example 400, the UE 320 performs an uplink transmission 405. As further shown, the uplink transmission 405 interferes with a downlink reception 410 of the ATG UE 305. For example, a TA may be used to prevent interference between UEs covered by a base station, such as ATG UE 305 and UE 320. The ATG UE 305 may have an accurate TA value 415 (shown as a difference between the ATG UE UL slot and the ATG base station UL slot), such as determined by a global navigation satellite system (GNSS) or configured in a downlink RACH message by the ATG base station 310. However, for the purpose of transmission of the first RACH message, the UE 320 may not have a TA or may only have a TA as configured in an SSB, a master information block (MIB), or a system information block (SIB) (such as via a configured parameter *ServingCellConfigCommon*), which may take certain predefined values not usable in an ATG scenario. In this example, the UE 320's TA may be misaligned with the ATG UE 305's TA, such that reception by the ATG UE 305 occurs concurrently with transmission by the UE 320. This concurrent reception and transmission may cause interference with downlink reception by the ATG UE 305. It can be seen that this interference would be exacerbated for large numbers of UEs 320, which are expected in some scenarios.

Furthermore, a UE 320 may not have sufficient transmit power to enable the UE 320 to successfully transmit the RACH message to the ATG base station 310, meaning that the UE 320 may not receive a response to the RACH message. If the UE 320 does not receive a response to the RACH message, the UE 320 may repeatedly transmit the RACH message, thus causing ongoing interference at the ATG UE 305. This scenario may lead to diminished throughput, degraded radio communication performance at the ATG UE 305, and increased battery usage at the UEs 320.

Some techniques and apparatuses described herein provide an SSB that is dedicated for ATG UEs (e.g., ATG UE 305), referred to herein as an ATG dedicated SSB. In some examples, the ATG dedicated SSB may be configured such that the ATG dedicated SSB can be received and/or successfully interpreted by the ATG UE 305 and not the UE 320. In other words, the ATG dedicated SSB may have a structural characteristic that renders the ATG dedicated SSB unrecognizable as an SSB to a UE that is not an ATG UE. For example, the configuration of the ATG dedicated SSB may be based at least in part on a changed position of one or more signals in the ATG dedicated SSB, a dedicated radio network temporary identifier (RNTI) of the ATG dedicated SSB, or an SSB pattern of the ATG dedicated SSB. As another example, the configuration of the ATG dedicated SSB may be based at least in part on an SSB time-frequency position specific to ATG dedicated SSBs, such as a changed position of the ATG dedicated SSB in one or more of time or frequency. In this way, the SSB may be received by the ATG UE 305 and not the UE 320. Preventing the UE 320 from receiving the SSB may avoid triggering the UE 320 to perform a RACH procedure, thereby reducing interference at the ATG UE 305, increasing throughput, improving radio communication performance, and decreasing battery usage at UE 320.

As indicated above, Fig. 4 is provided as an example. Other examples may differ from what is described with regard to Fig. 4.

Fig. 5 is a diagram illustrating an example 500 of a synchronization signal (SS) hierarchy, in accordance with the present disclosure. As shown in Fig. 5, the SS hierarchy may include an SS burst set 505, which may include multiple SS bursts 510, shown as SS burst 0 through SS burst N-1, where N is a maximum number of repetitions of the SS burst 510 that may be transmitted by the base station. As further shown, each SS burst 510 may include one or more SS blocks (SSBs) 515, shown as SSB 0 through SSB M-1, where M is a maximum number of SSBs 515 that can be carried by an SS burst 510. An SSB may also be referred to as a synchronization signal/physical broadcast channel block (also abbreviated SSB). In some aspects, different SSBs 515 may be beam-formed differently (e.g., transmitted using different beams), and may be used for cell search, cell acquisition, beam management, and/or beam selection (e.g., as part of an initial network access procedure). For example, an SSB may trigger a UE (e.g., UE 120, UE 305, UE 320) to perform an initial network access procedure via PRACH transmission. An SS burst set 505 may be periodically transmitted by a wireless node (e.g., base station 110), such as every X milliseconds, as shown in Fig. 5. In some aspects, an SS burst set 505 may have a fixed or dynamic length, shown as Y milliseconds in Fig. 5. In some cases, an SS burst set 505 or an SS burst 510 may be referred to as a discovery reference signal (DRS) transmission window or an SSB measurement time configuration (SMTC) window.

In some aspects, an SSB 515 may include resources that carry a primary synchronization signal (PSS) 520, a secondary synchronization signal (SSS) 525, and/or a physical broadcast channel (PBCH) 530. In some aspects, multiple SSBs 515 are included in an SS burst 510 (e.g., with transmission on different beams), and the PSS 520, the SSS 525, and/or the PBCH 530 may be the same across each SSB 515 of the SS burst 510. In some aspects, a single SSB 515 may be included in an SS burst 510. In some aspects, the SSB 515 may be at least four symbols (e.g., OFDM symbols) in length, where each symbol carries one or more of the PSS 520 (e.g., occupying one symbol), the SSS 525 (e.g., occupying one symbol), and/or the PBCH 530 (e.g., occupying two symbols and at least a part of a third symbol). In some aspects, an SSB 515 may be referred to as an SS/PBCH block.

The PSS may occupy a number of (e.g., 127) subcarriers within a symbol, whereas the SSS may occupy a number of (e.g., 127) subcarriers within another symbol. The PBCH may occupy a number of resource blocks (RBs) within one or more symbols, such as a symbol that does not include a PSS and/or SSS or a symbol that does include a PSS or an SSS. The resources allocated for the PBCH accommodate both the PBCH payload and one or more DMRSs. A DMRS is a signal used to demodulate received information, such as a PBCH. The SSB indicates a physical cell identity (PCI, and sometimes referred to as a physical layer cell identity). For example, the PSS may indicate a cell number, and the SSS may indicate a cell group number. Thus, a UE receiving the SSB can identify a cell via which the SSB was transmitted, and can attempt to connect to the cell by performing a RACH procedure. As mentioned above, if a UE 320 (or a group of UEs 320) were to ascertain the identity of a cell and attempt to connect to the cell, the UE 320 or group of UEs 320 might repeatedly fail to connect to the cell and may cause interference at an ATG UE 305.

In some aspects, the symbols of an SSB 515 are consecutive, as shown in Fig. 5. In some aspects, the symbols of an SSB 515 are non-consecutive. Similarly, in some aspects, one or more SSBs 515 of the SS burst 510 may be transmitted in consecutive radio resources (e.g., consecutive symbols) during one or more slots. Additionally, or alternatively, one or more SSBs 515 of the SS burst 510 may be transmitted in non-consecutive radio resources.

In some aspects, the SS bursts 510 may have a burst period, and the SSBs 515 of the SS burst 510 may be transmitted by a wireless node (e.g., base station 110) according to the burst period. In this case, the SSBs 515 may be repeated during each SS burst 510. In some aspects, the SS burst set 505 may have a burst set periodicity, whereby the SS bursts 510 of the SS burst set 505 are transmitted by the wireless node according to the fixed burst set periodicity. In other words, the SS bursts 510 may be repeated during each SS burst set 505.

In some aspects, an SSB 515 may include an SSB index, which may correspond to a beam used to carry the SSB 515. A UE 120 may monitor for and/or measure SSBs 515 using different receive (Rx) beams during an initial network access procedure and/or a cell search procedure, among other examples. Based at least in part on the monitoring and/or measuring, the UE 120 may indicate one or more SSBs 515 with a best signal parameter (e.g., a reference signal received power (RSRP) parameter) to a base station 110. The base station 110 and the UE 120 may use the one or more indicated SSBs 515 to select one or more beams to be used for communication between the base station 110 and the UE 120 (e.g., for a RACH procedure). Additionally, or alternatively, the UE 120 may use the SSB 515 and/or the SSB index to determine a cell timing for a cell via which the SSB 515 is received (e.g., a serving cell).

Example 500 shows an ATG dedicated SSB 535. The ATG dedicated SSB 535 may be associated with an ATG dedicated format, and a non-ATG dedicated SSB (that is, SSB 515) may be associated with a legacy format. In some aspects, the ATG dedicated SSB 535 has a structural characteristic that is different than a structural characteristic of a non-ATG dedicated SSB. The ATG dedicated SSB may be configured to be decoded by an aircraft UE, and the structural characteristic of the ATG dedicated SSB may render the ATG dedicated SSB unrecognizable as an SSB to a UE that is not an aircraft UE. In some aspects, the base station 110 may transmit, and/or the UE 120 may receive, the ATG dedicated SSB based at least in part on an identification of a type of the UE 120. For example, the base station 110 and/or the UE 120 may identify the UE 120 as a UE that is configured to receive and decode an ATG dedicated SSB, a UE that is configured to perform ATG communications, an ATG UE, and/or an aircraft UE, among other examples.

In one example, the ATG dedicated format may provide that the ATG dedicated SSB 535 uses a different SSB pattern than the SSB 515. An SSB pattern indicates locations of the PSS, the SSS, and the PBCH in the SSB. The SSB pattern used for the ATG dedicated SSB 535 may be for ATG dedicated SSBs. In one example, as shown, the locations of the PSS 520 and the SSS 525 may be switched in the ATG dedicated SSB 535. More generally, a time period in which the SSS 525 occurs may occur prior to a time period in which the PSS 520 occurs. Thus, an ATG UE 305 configured to receive the ATG dedicated SSB 535 may be capable of identifying a PCI associated with the ATG dedicated SSB 535 (such as based at least in part on an SSB pattern specific to ATG dedicated SSBs 535), whereas a UE 320 that is not configured to receive an ATG dedicated SSB 535 may not identify the PCI. Thus, the UE 320 may not be triggered to perform a RACH procedure by the ATG dedicated SSB 535. Furthermore, by switching the locations of the PSS 520 and the SSS 525, detection complexity of the ATG dedicated SSB 535 is not increased. It should be noted that other SSB patterns than the one shown for the ATG dedicated SSB 535 can be used for ATG dedicated SSBs 535, so long as the SSB pattern differs from the SSB pattern of the SSB 515. In some aspects, ATG dedicated SSBs 535 may be located at time periods unique to ATG communications, may include ATG dedicated time offsets, may include ATG dedicated frequency offsets, and/or be transmitted by NR-ATG specific base stations, among other examples.

As mentioned above, the PBCH 530 may include one or more DMRSs (not shown). A DMRS may be at a predefined position in the PBCH 530 according to a format (e.g., a legacy format or an ATG dedicated format) of the SSB 515/535. For example, for SSB 515, according to a legacy format, a DMRS may be located at subcarrier numbers [0 + $v$, 4 + $v$, 8 + $v$, ..., 236 + $v$], or [0 + $v$, 4 + $v$, 8 + $v$, ... 44 + $v$] and [192 + $v$, 196 + $v$, 200 + $v$, . . ., 236 + $v$] relative to the start of the SSB, where $v = \left(N_{ID}^{Cell}\right) \bmod 4$ In an ATG dedicated format, the DMRS may be located at subcarrier numbers [0 +$v$, 4 + $v$, 8 + $v$, ..., 236 + $v$], or [0 + $v$, 4 + $v$, 8 + $v$, ... 44 + $v$] and [192 + $v$, 196 + $v$, 200 + $v$, ..., 236 + $v$], where $v = \left(N_{ID}^{Cell} + \Delta\right) \bmod 4$. For example, the ATG dedicated SSB 535 may use a changed position of the DMRS relative to the SSB 515. For example, the ATG dedicated SSB 535 may use a DMRS that is at a first location that is different than a second location of the DMRS for the SSB 515. More particularly, the first location may be frequency shifted relative to the second location. For example, the DMRS subcarrier number may be given by $v = \left(N_{ID}^{Cell} + \Delta\right) \bmod 4$, wherein the $\Delta$ is the frequency shift of the ATG dedicated format relative to the legacy format. Thus, the ATG UE 305 can demodulate the PBCH 530 using the DMRS at the shifted position, whereas the UE 320 cannot demodulate the PBCH 530.

In some aspects, the ATG dedicated format may be based at least in part on a number of subcarriers associated with the DMRS in each set of a plurality of sets of consecutive subcarriers. For example, in the legacy format, there may be 1 subcarrier with a DMRS for each group of 4 consecutive subcarriers of the SSB 515 (as illustrated, for example, by the definition of the DMRS at subcarrier numbers $[0, 4, 8, \ldots, 236]$, above). In the ATG dedicated format, there may be X subcarriers with a DMRS for each group of 4X consecutive subcarriers, where X can be any integer. Thus, the ATG UE 305 can demodulate the PBCH 530 using the DMRS at the shifted position, whereas the UE 320 cannot demodulate the PBCH 530.

The PBCH 530 may have an attached cyclic redundancy check (CRC). For example, the PBCH 530 may be used to transmit the MIB via the broadcast channel (BCH) transport channel and the broadcast control channel (BCCH) logical channel. The MIB may have a size of 24 bits (1 bit for indication of MIB or message-ClassExtension and 23 bits for the MIB itself). The MIB includes timing information in terms of the 6 most significant bits of the system frame number. The 4 least significant bits are not included within the MIB. At the physical layer, the base station attaches the 4 least significant bits of the system frame number, which reduces the rate at which the RRC layer has to update the MIB. During physical layer processing of the MIB for PBCH process, a CRC is determined and attached to the MIB. The CRC may be a 24-bit value that is calculated from 32 bits of the MIB and then concatenated with the MIB (e.g., the PBCH portion of the ATG dedicated SSB 535). For the ATG dedicated SSB 535, the CRC may be generated use an ATG dedicated radio network temporary identifier (RNTI). Thus, the ATG UE 305, to which the ATG dedicated RNTI is known, can decode the MIB, whereas the ATG UE 305, to which the ATG dedicated RNTI is not known, cannot decode the MIB.

In some aspects, the ATG dedicated SSB 535 may be transmitted on an ATG dedicated transmission resource. For example, the ATG dedicated transmission resource may be an ATG dedicated time resource, an ATG dedicated frequency resource, or a combination thereof. An ATG dedicated transmission resource is a resource on which an ATG dedicated SSB 535, and not a legacy SSB 515, is configured to be transmitted.

In one example, the ATG dedicated time resource may use a changed position in the time domain for the ATG dedicated SSB 535. For example, for a 15 kHz subcarrier spacing (SCS), the first symbols of the candidate SSBs for the ATG dedicated SSB 535 may have indexes of $\{2,8\}+14n+\Delta$, $\Delta \in \{-2, -1,1,2,3,4,5\}$. As another example, for a 30 kHz SCS, the first symbols of the of the candidate SSBs for the ATG dedicated SSB 535 may have indexes $\{4,8,16,20\}+28n+\Delta$, $\Delta \in \{-3, -2 - 1,1,2,3,5,6,7\}$, where for carrier frequencies smaller than or equal to 3 GHz, n = 0, and for carrier frequencies within FR1 larger than 3 GHz, n = 0,1. As yet another example, for a 30 kHz SCS, the first symbols of the candidate SSBs for the ATG dedicated SSB 535 may have indexes $\{2,8\}+14n+\Delta$, $\Delta \in \{-2, -1,1,2,3,4,5\}$.

As still another example, for a 120 kHz SCS, the first symbols of the candidate SSBs for the ATG dedicated SSB 535 may have indexes $\{4,8,16,20\}+28n+\Delta$, $\Delta \in \{-3, -2 - 1,1,2,3,5,6,7\}$, where for carrier frequencies within FR2, n = 0, 1, 2, 3, 5, 6, 7, 8, 10, 11, 12, 13, 15, 16, 17, 18. As another example, for a 240 kHz SCS, the first symbols of the candidate SSBs for the ATG dedicated SSB 535 may have indexes $\{8,12,16,20,32,36,40,44\}+56n+\Delta$, $\Delta \in \{-7, -6, -5, -3, -2 - 1,1,2,3,5,6,7,9,10,11\}$. For carrier frequencies within FR2, $n$ = 0, 1, 2, 3, 5, 6, 7, 8. The ATG UE 305 may be configured to monitor the candidate SSBs for the ATG dedicated SSB 535 that are defined above, whereas the UE 320 may not be configured to monitor these candidate SSBs. For example, at least one ATG dedicated transmission resource may be associated with an exclusionary rule for UEs 320, where the exclusionary rule prohibits RACH preamble transmission by passenger UEs using the at least one ATG dedicated transmission resource. As another example, UEs 320 may be configured to monitor only transmission resources associated with SSBs 515, whereas UEs 305 may be configured to monitor ATG dedicated transmission resources associated with ATG dedicated SSBs 535. Thus, the triggering of the UE 320 to perform a RACH procedure can be avoided.

In some aspects, the ATG dedicated frequency resource may be based at least in part on a frequency shift. For example, the frequency shift may be defined by a parameter. One example of a name of the parameter is *AtgOffsetToPointA*. The parameter may indicate a frequency shift. For example, the parameter may indicate an offset of a physical resource block (PRB) between Point A and a lowest subcarrier of a lowest PRB of an ATG dedicated SSB 535. Point A is a common reference point for all resource block grids in the frequency grid, is the center of the subcarrier 0 of a common resource block 0 of the lowest resource grid, and can be outside of a carrier bandwidth. In some aspects, an ATG dedicated transmission resource may be determined as a combination of an ATG dedicated frequency resource (as defined above) and a combination of an ATG dedicated time resource (as also defined above). Alternatively, an ATG dedicated transmission resource may be defined as only one of an ATG dedicated frequency resource and an ATG dedicated time resource. For example, if the ATG dedicated frequency resource is used, then a legacy rule for determining the ATG dedicated SSB 535's time resource may be used, and vice versa.

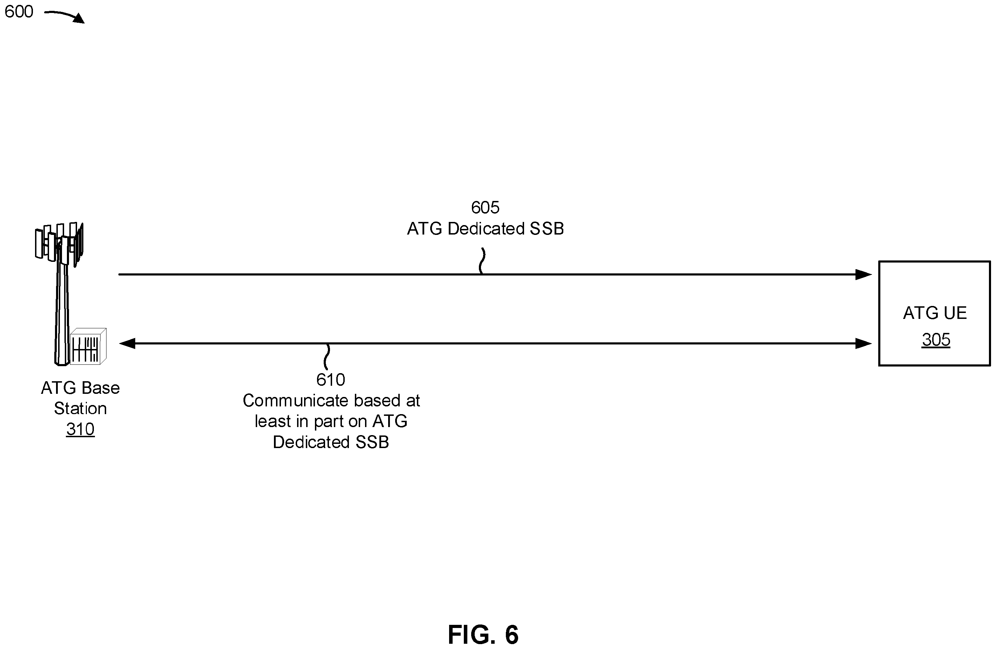

By using an ATG dedicated SSB 535 in the manner described above, the UE 320 is prevented from receiving (that is, successfully detecting, demodulation, decoding, and/or interpreting) the ATG dedicated SSB. Thus, the ATG base station 310 may avoid triggering the UE 320 to perform a RACH procedure, thereby reducing interference at the ATG UE 305, increasing throughput, improving radio communication performance, and decreasing battery usage at UE 320. For an example of transmission and reception of the ATG dedicated SSB 535, refer to the description accompanying Fig. 6.

As indicated above, Fig. 5 is provided as an example. Other examples may differ from what is described with regard to Fig. 5.

Fig. 6 is a diagram illustrating an example 600 of signaling using an ATG dedicated SSB 535, in accordance with the present disclosure. As shown, example 600 includes an ATG base station 310 and an ATG UE 305.

As show by reference number 605, the ATG base station 310 may transmit an ATG dedicated SSB (e.g., ATG dedicated SSB 535, described in connection with Fig. 5) to the ATG UE 305. For example, the ATG base station 310 may generate the ATG dedicated SSB in accordance with one or more of the techniques described with regard to Fig. 5 and may transmit the ATG dedicated SSB to the ATG UE 305. In some aspects, the ATG base station 310 may transmit the ATG dedicated SSB on an ATG dedicated transmission resource, such as at least one of an ATG dedicated frequency resource or an ATG dedicated time resource. In some aspects, the ATG base station 110 may transmit information indicating a resource on which to monitor for the ATG dedicated SSB 535.

The ATG UE 305 may receive the ATG dedicated SSB. The ATG UE 305 may receive (e.g., detect, decode, demodulate, and/or interpret) the ATG dedicated SSB according to an ATG dedicated format associated with the ATG dedicated SSB. For example, the ATG UE 305 may receive the ATG dedicated SSB in accordance with one or more of the techniques described with regard to Fig. 5.

As shown by reference number 610, the ATG UE 305 and the ATG base station 310 may communicate with each other based at least in part on the ATG dedicated SSB. For example, the ATG UE 305 may identify a PCI of the ATG base station 310 using the ATG dedicated SSB. In some aspects, the ATG UE 305 may transmit a RACH message (e.g., a RACH preamble) to the ATG base station 310 based at least in part on the ATG dedicated SSB. For example, the ATG dedicated SSB may trigger the ATG UE 305 (and not an ATG UE 320) to transmit the RACH message in order to establish a connection (e.g., an ATG link) with the ATG base station 310.

By transmitting the ATG dedicated SSB in the fashion described above, the ATG base station 310 prevents a UE 320 (not shown) from receiving the ATG dedicated SSB. Thus, the ATG base station 310 may avoid triggering the UE 320 to perform a RACH procedure, thereby reducing interference at the ATG UE 305, increasing throughput, improving radio communication performance, and decreasing battery usage at UE 320.

As indicated above, Fig. 6 is provided as an example. Other examples may differ from what is described with respect to Fig. 6.

Fig. 7 is a diagram illustrating an example process 700 performed, for example, by a UE, in accordance with the present disclosure. Example process 700 is an example where the UE (e.g., UE 120, ATG UE 305) performs operations associated with dedicated synchronization signal block design for wireless air-to-ground communications.

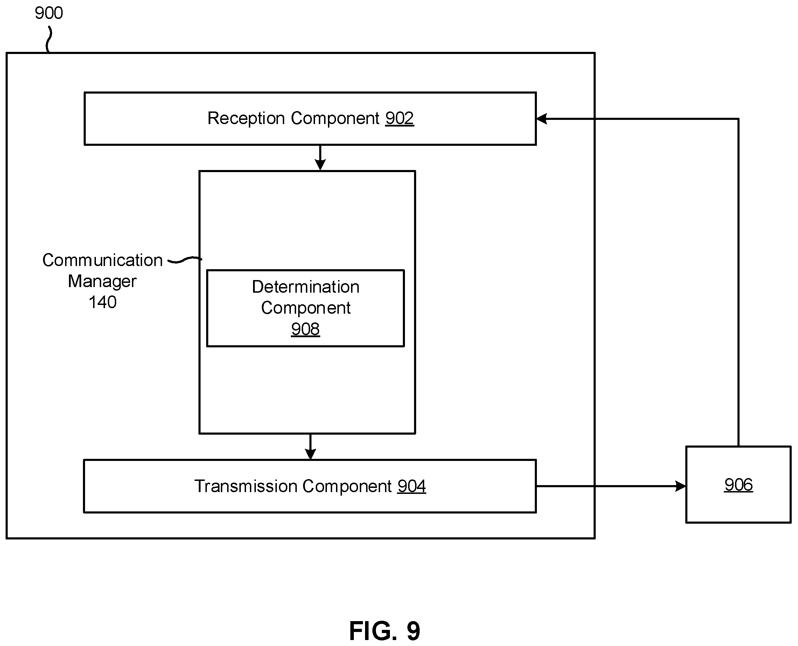

As shown in Fig. 7, process 700 includes receiving, from a base station, an ATG dedicated SSB (block 710). For example, the UE (e.g., using communication manager 140 and/or reception component 902, depicted in Fig. 9) may receive, from a base station, an ATG dedicated SSB, as described above.

As further shown in Fig. 7, process 700 includes communicating with the base station based at least in part on the ATG dedicated SSB (block 720). For example, the UE (e.g., using communication manager 140 and/or transmission component 904, depicted in Fig. 9) may communicate with the base station based at least in part on the ATG dedicated SSB, as described above.

Process 700 may include additional aspects, such as any single aspect or any combination of aspects described below and/or in connection with one or more other processes described elsewhere herein.

In a first aspect, receiving the ATG dedicated SSB comprises receiving the ATG dedicated SSB based at least in part on an identification of a type of the UE.

In a second aspect, alone or in combination with the first aspect, the type of the UE is an aircraft type.

In a third aspect, alone or in combination with one or more of the first and second aspects, receiving the ATG dedicated SSB comprises receiving the ATG dedicated SSB based at least in part on determining (e.g., using communication manager 140 and/or determination component 908, depicted in Fig. 9) that the base station is a New Radio-ATG specific base station.

In a fourth aspect, alone or in combination with one or more of the first through third aspects, the ATG dedicated SSB has a structural characteristic that is different than a structural characteristic of a non-ATG dedicated SSB.

In a fifth aspect, alone or in combination with one or more of the first through fourth aspects, the ATG dedicated SSB is configured to be decoded by an aircraft UE, and the structural characteristic of the ATG dedicated SSB renders the ATG dedicated SSB unrecognizable as an SSB to a UE that is not an aircraft UE.

In a sixth aspect, alone or in combination with one or more of the first through fifth aspects, the ATG dedicated SSB comprises a primary synchronization signal (PSS) corresponding to a first time period and a secondary synchronization signal (SSS) corresponding to a second time period, wherein the second time period occurs before the first time period.

In a seventh aspect, alone or in combination with one or more of the first through sixth aspects, an ATG dedicated format of the ATG dedicated SSB comprises a first location for a demodulation reference signal (DMRS) for a physical broadcast channel (PBCH) that is different than a second location, in a legacy format of a non-ATG dedicated SSB, for a DMRS for a PBCH.

In an eighth aspect, alone or in combination with one or more of the first through seventh aspects, the first location is frequency shifted with respect to the second location.

In a ninth aspect, alone or in combination with one or more of the first through eighth aspects, the ATG dedicated format includes a quantity of subcarriers associated with the DMRS for the PBCH in each set of a plurality of sets of consecutive subcarriers, wherein each set includes a quantity of subcarriers equal to four times the quantity of subcarriers.

In a tenth aspect, alone or in combination with one or more of the first through ninth aspects, a cyclic redundancy check (CRC) is attached to a physical broadcast channel portion of the ATG dedicated SSB using an ATG dedicated radio network temporary identifier.

In an eleventh aspect, alone or in combination with one or more of the first through tenth aspects, the ATG dedicated SSB comprises an ATG dedicated SSB pattern.

In a twelfth aspect, alone or in combination with one or more of the first through eleventh aspects, the ATG dedicated SSB is associated with at least one ATG dedicated transmission resource.

In a thirteenth aspect, alone or in combination with one or more of the first through twelfth aspects, the at least one ATG dedicated transmission resource comprises at least one of an ATG dedicated time resource or an ATG dedicated frequency resource.

In a fourteenth aspect, alone or in combination with one or more of the first through thirteenth aspects, receiving the ATG dedicated SSB comprises receiving the ATG dedicated SSB using at least one ATG dedicated transmission resource.

In a fifteenth aspect, alone or in combination with one or more of the first through fourteenth aspects, the at least one ATG dedicated transmission resource is associated with an exclusionary rule for passenger UEs, the exclusionary rule prohibiting random access channel preamble transmission by passenger UEs using the at least one ATG dedicated transmission resource.

In a sixteenth aspect, alone or in combination with one or more of the first through fifteenth aspects, at least one position of at least one of a first time domain or a first frequency domain associated with the ATG dedicated SSB is different than at least one position of at least one second time domain or a second frequency domain associated with a legacy SSB.

In a seventeenth aspect, alone or in combination with one or more of the first through sixteenth aspects, the at least one position of the first time domain comprises a plurality of sets of indexes corresponding to a plurality of subcarrier spacings (SCSs), wherein each set of indexes identifies a plurality of starting symbols of a plurality of respective candidate synchronization signal/physical broadcast channel (SS/PBCH) blocks based at least in part on an ATG dedicated time offset.

In an eighteenth aspect, alone or in combination with one or more of the first through seventeenth aspects, the at least one position of the first frequency domain is indicated by an ATG frequency offset parameter that indicates an offset in a physical resource block (PRB) between a common reference point for a resource block grid and a lowest subcarrier of a lowest PRB of the ATG dedicated SSB.

Although Fig. 7 shows example blocks of process 700, in some aspects, process 700 may include additional blocks, fewer blocks, different blocks, or differently arranged blocks than those depicted in Fig. 7. Additionally, or alternatively, two or more of the blocks of process 700 may be performed in parallel.

Fig. 8 is a diagram illustrating an example process 800 performed, for example, by a base station, in accordance with the present disclosure. Example process 800 is an example where the base station (e.g., base station 110, base station 310) performs operations associated with dedicated synchronization signal block design for wireless air-to-ground communications.

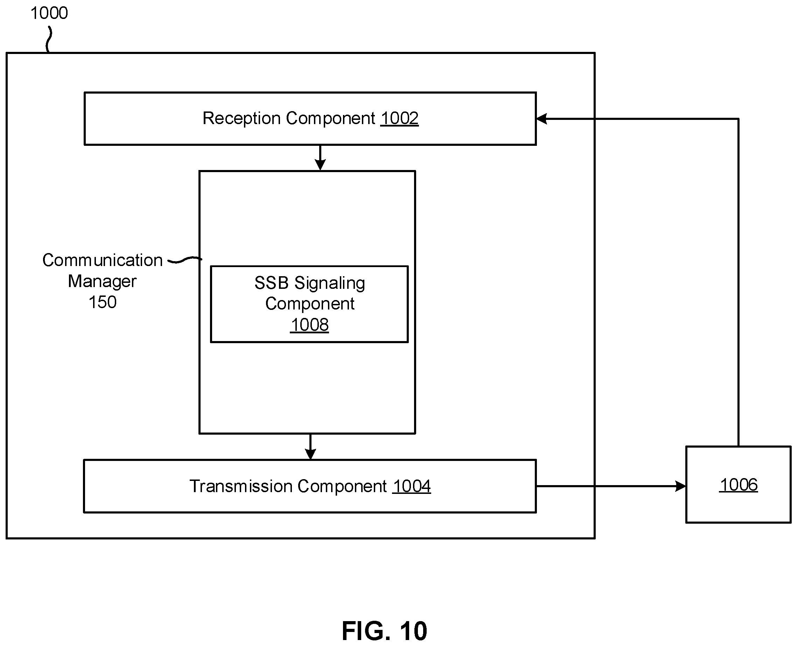

As shown in Fig. 8, process 800 includes transmitting, to an ATG UE, an ATG dedicated SSB (block 810). For example, the base station (e.g., using communication manager 150 and/or transmission component 1004 or SSB signaling component 1008, depicted in Fig. 10) may transmit, to an ATG UE, an ATG dedicated SSB, as described above.

As further shown in Fig. 8, process 800 includes communicating with the ATG UE based at least in part on the ATG dedicated SSB (block 820). For example, the base station (e.g., using communication manager 150 and/or reception component 1002, depicted in Fig. 10) may communicate with the ATG UE based at least in part on the ATG dedicated SSB, as described above.

Process 800 may include additional aspects, such as any single aspect or any combination of aspects described below and/or in connection with one or more other processes described elsewhere herein.

In a first aspect, the ATG dedicated SSB has a structural characteristic that is different than a structural characteristic of a non-ATG dedicated SSB.

In a second aspect, alone or in combination with the first aspect, the ATG dedicated SSB comprises a PSS corresponding to a first time period and an SSS corresponding to a second time period, wherein the second time period occurs before the first time period.

In a third aspect, alone or in combination with one or more of the first and second aspects, a CRC is attached to a physical broadcast channel portion of the ATG dedicated SSB using an ATG dedicated radio network temporary identifier.

In a fourth aspect, alone or in combination with one or more of the first through third aspects, the ATG dedicated SSB comprises an ATG dedicated SSB pattern.

In a fifth aspect, alone or in combination with one or more of the first through fourth aspects, the ATG dedicated SSB is associated with at least one ATG dedicated transmission resource.

In a sixth aspect, alone or in combination with one or more of the first through fifth aspects, at least one position of at least one of a first time domain or a first frequency domain associated with the ATG dedicated SSB is different than at least one position of at least one second time domain associated with a legacy SSB.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a block diagram of an example apparatus 900 for wireless communication. The apparatus 900 may be a UE, or a UE may include the apparatus 900. In some aspects, the apparatus 900 includes a reception component 902 and a transmission component 904, which may be in communication with one another (for example, via one or more buses and/or one or more other components). As shown, the apparatus 900 may communicate with another apparatus 906 (such as a UE, a base station, or another wireless communication device) using the reception component 902 and the transmission component 904. As further shown, the apparatus 900 may include the communication manager 140. The communication manager 140 may include a determination component 908, among other examples.

In some aspects, the apparatus 900 may be configured to perform one or more operations described herein in connection with Figs. 3-6. Additionally, or alternatively, the apparatus 900 may be configured to perform one or more processes described herein, such as process 700 of Fig. 7, or a combination thereof. In some aspects, the apparatus 900 and/or one or more components shown in Fig. 9 may include one or more components of the UE described in connection with Fig. 2. Additionally, or alternatively, one or more components shown in Fig. 9 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 902 may receive communications, such as reference signals, control information, data communications, or a combination thereof, from the apparatus 906. The reception component 902 may provide received communications to one or more other components of the apparatus 900. In some aspects, the reception component 902 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 906. In some aspects, the reception component 902 may include one or more antennas, a demodulator, a MIMO detector, a receive processor, a controller/processor, a memory, or a combination thereof, of the UE described in connection with Fig. 2.

The transmission component 904 may transmit communications, such as reference signals, control information, data communications, or a combination thereof, to the apparatus 906. In some aspects, one or more other components of the apparatus 906 may generate communications and may provide the generated communications to the transmission component 904 for transmission to the apparatus 906. In some aspects, the transmission component 904 may perform signal processing on the generated communications (such as filtering, amplification, modulation, digital-to-analog conversion, multiplexing, interleaving, mapping, or encoding, among other examples), and may transmit the processed signals to the apparatus 906. In some aspects, the transmission component 904 may include one or more antennas, a modulator, a transmit MIMO processor, a transmit processor, a controller/processor, a memory, or a combination thereof, of the UE described in connection with Fig. 2. In some aspects, the transmission component 904 may be co-located with the reception component 902 in a transceiver.

The reception component 902 may receive, from a base station, an ATG dedicated SSB. The transmission component 904 may communicate with the base station based at least in part on the ATG dedicated SSB.

The number and arrangement of components shown in Fig. 9 are provided as an example. In practice, there may be additional components, fewer components, different components, or differently arranged components than those shown in Fig. 9. Furthermore, two or more components shown in Fig. 9 may be implemented within a single component, or a single component shown in Fig. 9 may be implemented as multiple, distributed components. Additionally, or alternatively, a set of (one or more) components shown in Fig. 9 may perform one or more functions described as being performed by another set of components shown in Fig. 9.

Fig. 10 is a block diagram of an example apparatus 1000 for wireless communication, in accordance with the present disclosure. The apparatus 1000 may be a base station, or a base station may include the apparatus 1000. In some aspects, the apparatus 1000 includes a reception component 1002 and a transmission component 1004, which may be in communication with one another (for example, via one or more buses and/or one or more other components). As shown, the apparatus 1000 may communicate with another apparatus 1006 (such as a UE, a base station, or another wireless communication device) using the reception component 1002 and the transmission component 1004. As further shown, the apparatus 1000 may include the communication manager 150. The communication manager 150 may include one or more of an SSB signaling component 1008, among other examples.

In some aspects, the apparatus 1000 may be configured to perform one or more operations described herein in connection with Figs. 3-6. Additionally, or alternatively, the apparatus 1000 may be configured to perform one or more processes described herein, such as process 800 of Fig. 8, or a combination thereof. In some aspects, the apparatus 1000 and/or one or more components shown in Fig. 10 may include one or more components of the base station described in connection with Fig. 2. Additionally, or alternatively, one or more components shown in Fig. 10 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1002 may receive communications, such as reference signals, control information, data communications, or a combination thereof, from the apparatus 1006. The reception component 1002 may provide received communications to one or more other components of the apparatus 1000. In some aspects, the reception component 1002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1006. In some aspects, the reception component 1002 may include one or more antennas, a demodulator, a MIMO detector, a receive processor, a controller/processor, a memory, or a combination thereof, of the base station described in connection with Fig. 2.

The transmission component 1004 may transmit communications, such as reference signals, control information, data communications, or a combination thereof, to the apparatus 1006. In some aspects, one or more other components of the apparatus 1006 may generate communications and may provide the generated communications to the transmission component 1004 for transmission to the apparatus 1006. In some aspects, the transmission component 1004 may perform signal processing on the generated communications (such as filtering, amplification, modulation, digital-to-analog conversion, multiplexing, interleaving, mapping, or encoding, among other examples), and may transmit the processed signals to the apparatus 1006. In some aspects, the transmission component 1004 may include one or more antennas, a modulator, a transmit MIMO processor, a transmit processor, a controller/processor, a memory, or a combination thereof, of the base station described in connection with Fig. 2. In some aspects, the transmission component 1004 may be co-located with the reception component 1002 in a transceiver.

The transmission component 1004 or the SSB signaling component 1008 may transmit, to an ATG UE, an ATG dedicated SSB. The reception component 1002 may communicate with the ATG UE based at least in part on the ATG dedicated SSB.

The number and arrangement of components shown in Fig. 10 are provided as an example. In practice, there may be additional components, fewer components, different components, or differently arranged components than those shown in Fig. 10. Furthermore, two or more components shown in Fig. 10 may be implemented within a single component, or a single component shown in Fig. 10 may be implemented as multiple, distributed components. Additionally, or alternatively, a set of (one or more) components shown in Fig. 10 may perform one or more functions described as being performed by another set of components shown in Fig. 10.

The foregoing disclosure provides illustration and description, but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a processor is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. An apparatus (900) for wireless communication, comprising:

   at least one memory, comprising instructions; and
   one or more processors, coupled to the at least one memory, configured to execute the instructions to cause the apparatus to:

   receive, from a base station, an air-to-ground, ATG, dedicated synchronization signal block, SSB; and
communicate with the base station based at least in part on the ATG dedicated SSB.

2. The apparatus of claim 1, wherein the one or more processors, to receive the ATG dedicated SSB, are configured to receive the ATG dedicated SSB based at least in part on an identification of a type of a UE.

3. The apparatus of claim 2, wherein the type of the UE is an aircraft type.

4. The apparatus of claim 1, wherein the one or more processors, to receive the ATG dedicated SSB, are configured to receive the ATG dedicated SSB based at least in part on determining that the base station is a New Radio-ATG specific base station.

5. The apparatus of claim 1, wherein an ATG dedicated format of the ATG dedicated SSB comprises a first location for a demodulation reference signal, DMRS, for a physical broadcast channel, PBCH, that is different than a second location, in a legacy format of a non-ATG dedicated SSB, for a DMRS for a PBCH.

6. The apparatus of claim 1, wherein the one or more processors, to receive the ATG dedicated SSB, are configured to receive the ATG dedicated SSB using at least one ATG dedicated transmission resource.

7. An base station (1000) for wireless communication, comprising:

   a transceiver;
   at least one memory, comprising instructions; and
   one or more processors, coupled to the memory, configured to execute the instructions to cause the apparatus to:

   transmit, via the transceiver, to an air-to-ground, ATG, user equipment, UE, an ATG dedicated synchronization signal block, SSB; and
   communicate with the ATG UE based at least in part on the ATG dedicated SSB.

8. The apparatus of claim 1 or base station of claim 7, wherein the ATG dedicated SSB has a structural characteristic that is different than a structural characteristic of a non-ATG dedicated SSB.

9. The apparatus of claim 1 or base station of claim 7, wherein the ATG dedicated SSB comprises a primary synchronization signal, PSS, corresponding to a first time period and a secondary synchronization signal, SSS, corresponding to a second time period, wherein the second time period occurs before the first time period.

10. The apparatus of claim 1 or base station of claim 7, wherein a cyclic redundancy check, CRC, is attached to a physical broadcast channel portion of the ATG dedicated SSB using an ATG dedicated radio network temporary identifier.

11. The apparatus of claim 1 or base station of claim 7, wherein the ATG dedicated SSB comprises an ATG dedicated SSB pattern.

12. The apparatus of claim 1 or base station of claim 7, wherein the ATG dedicated SSB is associated with at least one ATG dedicated transmission resource.

13. The apparatus of claim 1 or base station of claim 7, wherein at least one position of at least one of a first time domain or a first frequency domain associated with the ATG dedicated SSB is different than at least one position of at least one second time domain associated with a legacy SSB.

14. A method (700) of wireless communication performed at a user equipment, UE, comprising:

receiving (710), from a base station, an air-to-ground, ATG, dedicated synchronization signal block, SSB; and
communicating (720) with the base station based at least in part on the ATG dedicated SSB.

15. A method (800) of wireless communication performed by a base station, comprising:

transmitting (810), to an air-to-ground, ATG, user equipment, UE, an ATG dedicated synchronization signal block, SSB; and
communicating (820) with the ATG UE based at least in part on the ATG dedicated SSB.

**Patentansprüche**

1. Eine Vorrichtung (900) für eine drahtlose Kommunikation, aufweisend:

wenigstens einen Speicher, der Befehle aufweist, und
einen oder mehrere Prozessoren, die mit dem wenigstens einen Speicher gekoppelt sind und konfiguriert sind zum Ausführen der Befehle, um die Vorrichtung zu veranlassen zum:

Empfangen, von einer Basisstation, eines Luft-Boden (Air-to-Ground bzw. ATG)-dedizierten Synchronisationssignalblocks (SSB), und
Kommunizieren mit der Basisstation basierend wenigstens teilweise auf dem ATG-dedizierten SSB.

2. Vorrichtung nach Anspruch 1, wobei der eine oder die mehreren Prozessoren für das Empfangen der ATG-dedizierten SSB konfiguriert sind zum Empfangen der ATG-dedizierten SSB basierend wenigstens teilweise auf einer Identifikation des Typs eines Benutzergeräts (User Equipment bzw. UE).

3. Vorrichtung nach Anspruch 2, wobei der Typ des UE ein Luftfahrzeugtyp ist.

4. Vorrichtung nach Anspruch 1, wobei der eine oder die mehreren Prozessoren für das Empfangen des ATG-dedizierten SSB konfiguriert sind zum Empfangen des ATG-dedizierten SSB basierend wenigstens teilweise auf dem Bestimmen, dass die Basisstation eine New Radio-ATG-spezifische Basisstation ist.

5. Vorrichtung nach Anspruch 1, wobei ein ATG-dediziertes Format des ATG-dedizierten SSB eine erste Position für ein Demodulationsreferenzsignal (DMRS) für einen physikalischen Broadcast-Kanal (PBCH), die verschieden von einer zweiten Position ist, in einem älteren Format eines nicht-ATG-dedizierten SSB für ein DMRS für einen PBCH aufweist.

6. Vorrichtung nach Anspruch 1, wobei der eine oder die mehreren Prozessoren für das Empfangen des ATG-dedizierten SSB konfiguriert sind zum Empfangen des ATG-dedizierten SSB unter Verwendung wenigstens einer ATG-dedizierten Senderessource.

7. Eine Basisstation (1000) für eine drahtlose Kommunikation, aufweisend:

einen Sendeempfänger,
wenigstens einen Speicher, der Befehle aufweist, und
einen oder mehrere Prozessoren, die mit dem Speicher gekoppelt sind und konfiguriert sind zum Ausführen der Befehle, um die Vorrichtung zu veranlassen zum:

Senden, über den Sendeempfänger an ein Luft-Boden (Air-to-Ground bzw. ATG)-Benutzergerät (User Equipment bzw. UE), eines ATG-dedizierten Synchronisationssignalblocks (SSB), und
Kommunizieren mit dem ATG-UE basierend wenigstens teilweise auf dem ATG-dedizierten SSB.

**8.** Vorrichtung nach Anspruch 1 oder Basisstation nach Anspruch 7, wobei der ATG-dedizierte SSB eine strukturelle Eigenschaft aufweist, die von einer strukturellen Eigenschaft eines nicht-ATG-dedizierten SSB verschieden ist.

**9.** Vorrichtung nach Anspruch 1 oder Basisstation nach Anspruch 7, wobei der ATG-dedizierte SSB ein primäres Synchronisationssignal (PSS) in Entsprechung zu einer ersten Zeitperiode und ein sekundäres Synchronisationssignal (SSS) in Entsprechung zu einer zweiten Zeitperiode aufweist, wobei die zweite Zeitperiode vor der ersten Zeitperiode auftritt.

**10.** Vorrichtung nach Anspruch 1 oder Basisstation nach Anspruch 7, wobei eine zyklische Redundanzprüfung (Cyclic Redundancy Check bzw. CRC) an einen Physikalischer-Broadcast-Kanal-Teil des ATG-dedizierten SSB unter Verwendung eines ATG-dedizierten Funknetz-Temporäridentifizierers angefügt ist.

**11.** Vorrichtung nach Anspruch 1 oder Basisstation nach Anspruch 7, wobei der ATG-dedizierte SSB ein ATG-dediziertes SSB-Muster aufweist.

**12.** Vorrichtung nach Anspruch 1 oder Basisstation nach Anspruch 7, wobei der ATG-dedizierte SSB mit wenigstens einer ATG-dedizierten Senderessource assoziiert ist.

**13.** Vorrichtung nach Anspruch 1 oder Basisstation nach Anspruch 7, wobei wenigstens eine Position einer ersten Zeitdomäne und/oder einer ersten Frequenzdomäne, die mit dem ATG-dedizierten SSB assoziiert sind, von wenigstens einer Position wenigstens einer zweiten Zeitdomäne, die mit einem älteren SSB assoziiert ist, verschieden ist.

**14.** Ein Verfahren (700) für eine drahtlose Kommunikation, das an einem Benutzergerät (User Equipment bzw. UE) durchgeführt wird, aufweisend:

Empfangen (710), von einer Basisstation, eines Luft-Boden (Air-to-Ground bzw. ATG)-dedizierten Synchronisationssignalblocks (SSB), und Kommunizieren (720) mit der Basisstation basierend wenigstens teilweise auf dem ATG-dedizierten SSB.

**15.** Ein Verfahren (800) für eine drahtlose Kommunikation, das durch eine Basisstation durchgeführt wird, aufweisend:

Senden (810), an ein Luft-Boden (Air-to-Ground bzw. ATG)-Benutzergerät (User Equipment bzw. UE), eines ATG-dedizierten Synchronisationssignalblocks (SSB), und Kommunizieren (820) mit dem ATG-UE basierend wenigstens teilweise auf dem ATG-dedizierten SSB.

## Revendications

**1.** Un appareil (900) de communication sans fil, comprenant :

au moins une mémoire, comprenant des instructions ; et
un ou plusieurs processeurs, couplés à au moins une mémoire, configurés pour exécuter les instructions pour amener l'appareil à :

recevoir, à partir d'une station de base, un bloc de signal de synchronisation, SSB, dédié air-sol, ATG ; et
communiquer avec la station de base en se basant au moins en partie sur le SSB dédié ATG.

**2.** L'appareil de la revendication 1, dans lequel le ou les processeurs, pour recevoir le SSB dédié ATG, sont configurés pour recevoir le SSB dédié ATG en se basant au moins en partie sur l'identification d'un type d'UE.

**3.** L'appareil de la revendication 2, dans lequel le type d'UE est un type d'aéronef.

**4.** L'appareil de la revendication 1, dans lequel le ou les processeurs, pour recevoir le SSB dédié à l'ATG, sont configurés pour recevoir le SSB dédié à l'ATG en se basant au moins en partie sur la détermination que la station de base est une station de base New Radio spécifique à ATG.

**5.** L'appareil de la revendication 1, dans lequel un format dédié ATG du SSB dédié ATG comprend un premier emplacement pour un signal de référence de démodulation, DMRS, pour un canal de diffusion physique, PBCH, qui est différent d'un deuxième emplacement, dans un format hérité d'un SSB non dédié ATG, pour un DMRS pour un PBCH.

**6.** L'appareil de la revendication 1, dans lequel le ou les processeurs, pour recevoir le SSB dédié à l'ATG, sont configurés pour recevoir le SSB dédié à l'ATG en utilisant au moins une ressource de transmission dédiée à l'ATG.

**7.** Une station de base (1000) pour communication sans fil, comprenant :

un émetteur-récepteur ;
au moins une mémoire, comprenant des instructions ; et

un ou plusieurs processeurs, couplés à la mémoire, configurés pour exécuter les instructions pour amener l'appareil à :

transmettre, via l'émetteur-récepteur, à un équipement utilisateur, UE, air-sol, ATG, un bloc de signal de synchronisation, SSB, dédié à l'ATG ; et
communiquer avec l'UE ATG en se basant au moins en partie sur le SSB dédié ATG.

8. L'appareil de la revendication 1 ou la station de base de la revendication 7, dans lequel le SSB dédié ATG présente une caractéristique structurelle différente d'une caractéristique structurelle d'un SSB non dédié ATG.

9. L'appareil selon la revendication 1 ou la station de base selon la revendication 7, dans lequel le SSB dédié ATG comprend un signal de synchronisation primaire, PSS, correspondant à une première période de temps et un signal de synchronisation secondaire, SSS, correspondant à une seconde période de temps, dans lequel la seconde période de temps se produit avant la première période de temps.

10. L'appareil selon la revendication 1 ou la station de base selon la revendication 7, dans lequel un contrôle de redondance cyclique, CRC, est attaché à une partie de canal de diffusion physique du SSB dédié ATG en utilisant un identifiant temporaire de réseau radio dédié ATG.

11. L'appareil selon la revendication 1 ou la station de base selon la revendication 7, dans lequel le SSB dédié à l'ATG comprend un motif de SSB dédié à l'ATG.

12. L'appareil selon la revendication 1 ou la station de base selon la revendication 7, dans lequel le SSB dédié à l'ATG est associé à au moins une ressource de transmission dédiée à l'ATG.

13. L'appareil selon la revendication 1 ou la station de base selon la revendication 7, dans lequel au moins une position d'au moins un parmi un premier domaine temporel ou un premier domaine fréquentiel associé au SSB dédié à l'ATG est différent d'au moins une position d'au moins un deuxième domaine temporel associé à un SSB classique.

14. Une méthode (700) de communication sans fil réalisée au niveau d'un équipement utilisateur, UE, comprenant :

recevoir (710), à partir d'une station de base, un bloc de signal de synchronisation, SSB, dédié air-sol, ATG ; et
communiquer (720) avec la station de base basée au moins en partie sur le SSB dédié ATG.

15. Un procédé (800) de communication sans fil réalisé par une station de base, comprenant :

la transmission (810), à un équipement d'utilisateur, UE, air-sol, ATG, d'un bloc de signal de synchronisation, SSB, dédié ATG ; et
la communication (820) avec l'UE ATG basée au moins en partie sur le SSB dédié ATG.

FIG. 1

**FIG. 2**

300

Aircraft
315

ATG UE
305

UE
320

UE
320

ATG Base
Station
310

FIG. 3

400 ⟶

ATG Base Station
310

415 ⟶

UL

ATG UE
305

UL

410 ⟶ DL

Interference

UE
320

405 ⟶ UL

**FIG. 4**

EP 4 352 890 B1

**FIG. 5**

EP 4 352 890 B1

600 →

605
ATG Dedicated SSB

ATG Base
Station
310

ATG UE
305

610
Communicate based at
least in part on ATG
Dedicated SSB

**FIG. 6**

700 →

710 ~ Receive, from a base station, an air-to-ground (ATG) dedicated synchronization signal block (SSB)

↓

720 ~ Communicate with the base station based at least in part on the ATG dedicated SSB

**FIG. 7**

800

810 ~ Transmit, to an ATG user equipment (UE), an ATG dedicated SSB

820 ~ Communicate with the ATG UE based at least in part on the ATG dedicated SSB

**FIG. 8**

**FIG. 9**

Reception Component 1002

Transmission Component 1004

SSB Signaling Component 1008

Communication Manager 150

1000

1006

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9991945 B

- KR 20060046938